# EUROPÄISCHE PATENTSCHRIFT

(11) **EP 1 830 140 B1**
(45) Veröffentlichungstag und Bekanntmachung des Hinweises auf die Patenterteilung: **30.04.2014**
(21) Anmeldenummer: 07103280.9
(22) Anmeldetag: 01.03.2007
(51) Int. Cl.: F24J 2/26

(54) **Hybridkollektor**
Hybrid collector
Collecteur hybride

(30) Priorität: 04.03.2006 DE 202006003399 U
(43) Veröffentlichungstag der Anmeldung: 05.09.2007
(73) Patentinhaber: SCHÜCO International KG, 33609 Bielefeld (DE)
(72) Erfinder: SILLMANN, Roland, 33824, Werther (DE); THOLE, Frank, 33739, Bielefeld (DE)
(74) Vertreter: Specht, Peter

(56) Entgegenhaltungen:
- WO-A1-03/064938
- WO-A1-2005/075900
- DE-U1- 9 410 207
- FR-A1- 2 546 280
- JP-A- 2002 089 973
- US-A- 4 159 708
- US-A- 4 296 741

## Beschreibung

Die Erfindung betrifft einen Hybridkollektor nach dem Oberbegrif des Anspruchs 1.

Die US 4,159,708 offenbart einen weitestgehend gattungsgemäßen Hybridkollektor mit einem Gehäuse, das ein Rahmenprofil, eine obere Abdeckung und eine untere Abdeckung aufweist und mit einem im Gehäuse angeordneten Absorber, der dazu ausgelegt ist, Sonnenenergie in Wärme umzuwandeln und der ein Absorberblech, Strömungskanäle für Luft, die wenigstens eines oder mehrere Luftleit-Holzelemente umfassen und Leitungen für eine Flüssigkeit, insbesondere Wasser, aufweist. Die Holzelemente dienen auch zur Festlegung der Leitungen, wobei die Holzelemente lattenartig ausgestaltet sind, mit Aussparungen versehen sind und senkrecht auf die Leitungen aufgesetzt sind.

In der DE 19915 504 wird ein Rahmenprofil für einen Sonnenkollektor beschrieben, der das einfallende Sonnenlicht dazu nutzt, um ein Wärmefluid zu erhitzen, um derart die einfallende Sonnenenergie in Wärmeenergie umzuwandeln, welche beispielsweise zur Warmwasserbereitung oder zur Heizungsunterstützung nutzbar ist. Ein derartiger Sonnenkollektor wird auch als Thermiekollektor bezeichnet Er weist einen Absorber auf, der aus einem Blech und einer Rohrleitung für das Wärmefluid besteht. Als Wärmefluid wird üblicherweise eine Flüssigkeit, insbesondere Wasser verwendet, welches in Kupferleitungen im Kollektor geführt wird. Um eine Schweißverbindung zu den Kupferleitungen zu schaffen, besteht auch das Absorberblech aus Kupfer. Derartige Sonnenkollektoren haben sich an sich bewährt, bedürfen aber der weiteren Verbesserung.

Problematisch sind einerseits der hohe Preis des Kupfers und die Tatsache, dass sich auf der sichtbaren Seite des Bleches Spuren der Verbindung abzeichnen können Weniger vorteilhaft ist zudem, dass die Mindesttemperatur zur Nutzung relativ hoch liegt.

Soll neben der Brauchwassererwärmung auch noch die Helzung eines Hauses unterstützt werden, so treten bei Thermiekollektoren zusätzliche Energiebilanzverluste auf, da das erwärmte Wasser in einem zusätzlichen Wärmetauscher, z. B. durch Heizkörper, die Raumluft erwärmen muss.

In der DE 201 00 746 wird ein Kollektor beschrieben, der einen Absorber aufweist zur Erwärmung von Luft durch Sonnenenergie. Solche Warmluftkollektoren können auch noch geringe Sonnenstrahlungen zum Erwärmen von Raumluft nutzen. Hieran ist problematisch, dass keine Speicherung der Warmluft möglich ist und dass die Warmwasserbereitung einen zusätzlichen Wärmetauscher erfordert.

Um die Vorteile beider Kollektortypen zu nutzen, sind bereits sogenannte Hybridkollektoren für die Wasser- und Lufterwärmung vorgeschlagen worden.

Bei den bekannten Hybridkollektoren sind insbesondere die Absorber nachteilig. So sind Absorber bekannt, die komplett aus Kupfer bestehen, wobei die Kupferrohre aufwendig unter Kupfer-Absorberplatten geschweißt oder geklebt werden müssen.

Vor diesem Hintergrund ist es die Aufgabe der Erfindung, einen Hybridkollektor mit einem gegenüber dem Stand der Technik verbesserten Aufbau zu schaffen.

Die Erfindung löst diese Aufgabe durch den Gegenstand des Anspruchs 1.

Vorteilhafte Ausgestaltungen sind den Unteransprüchen zu entnehmen.

Erfindungsgemäß sind die Flüssigkeitsleitungen von den Luftleitblechen an dem Absorberblech gehalten. Besonders bevorzugt erfolgt dieses Halten ohne eine stoffschlüssige Verbindung zwischen den Flüssigkeitsleitungen und dem Absorberblech und den Luftleitblechen. Das Flüssigkeitsrohr wird damit nicht, wie nach dem Stand der Technik, unter den Absorber geschweißt, gelötet oder geklebt. Hierdurch wird die Montage vereinfacht und es wird verhindert, dass sich Spuren eines stoffschlüssigen Verbindungsverfahrens dieser Elemente an der Oberfläche des Absorberbleches abzeichnen. Besonders vorteilhaft ist es auch, dass gerade das Luftleitblech die Aufgabe der Halterung mit übernimmt, so dass es eine Mehrfachfunktion erfüllt, was die Konstruktion deutlich vereinfacht.

Es ist zweckmäßig, dass die Absorberbleche Haltevorrichtungen zum Halten und Positionieren der Flüssigkeitsleitungen ausweisen. Vorteilhafterweise sind diese Vorrichtungen formschlüssig ausgebildet, um einen optimalen Wärmeübergang zu gewährleisten.

Dabei sind die Flüssigkeitsleitungen als Rohre ausgebildet und zumindest die Haltevorrichtungen der Luftleitbleche als zur Rohrgeometrie korrespondierende Aufnahmenuten.

Da keine stoffschlüssige Verbindung zu den Flüssigkeitsleitungen aufgebaut wird, ist es nach einer auch selbstständig erfinderischen Variante möglich, dass das Luftleitblech und/oder das Absorberblech kostengünstig aus Leichtmetall, insbesondere Aluminium, bestehen und dass die Flüssigkeitsleitungen als Rohre aus einem anderen Material, insbesondere Kupfer, ausgebildet sind.

Eine besonders einfache und effiziente Konstruktion ergibt sich, wenn wenigstens eines der Luftleitbleche eine U-Form hat und eine Basis aufweist, die zum Absorberblech gewandt ist, wobei die Flüssigkeitsleitungen zwischen dem Absorberblech und diesem Luftleitblech angeordnet sind. Dabei ist es zweckmäßig, wenn die Basis stoffschlüssig mit dem Absorberblech verbunden ist, vorzugsweise in einem Laser-Pulsschweiß-Verfahren.

Schräg angeordnete Luftleitbleche sorgen für eine verbesserte, optimale Luftführung. Hierdurch wird der Wirkungsgrad des Hybridkollektors erhöht.

Weitere Vorteile und die Funktionsweise der Erfindung erschließen sich auch aus der nachfolgenden Beschreibung von Ausführungsbeispielen, welche in der Zeichnung dargestellt sind. Es zeigen:
- Fig. 1: einen Teilschnitt durch einen erfindungsgemäßen Hybridkollektor;
- Fig. 2 und 3: jeweils einen Teilschnitt durch den erfindungsgemäßen Absorber; und
- Fig. 4 - 7: jeweils schematisch die Draufsicht eines erfindungsgemäßen Hybridkollektors mit unterschiedlicher Rohranordnung.

Nachfolgend beziehen sich Begriffe wie "obere" und "untere" Seite jeweils auf die Seite der Sonneneinstrahlung und die von der Seite der Sonneneinstrahlung abgewandte Seite. Diese Begriffe sind nicht einschränkend zu verstehen.

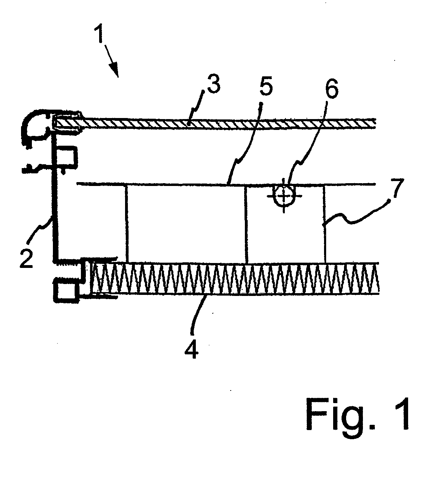

Figur 1 zeigt einen Teilschnitt durch einen erfindungsgemäßen Hybridkollektor 1. Das Gehäuse dieses Hybridkollektors baut auf einem umlaufenden Rahmen aus Rahmenprofilen 2 auf, der die Ränder von oberen und unteren Flächenelementen aufnimmt. Dass obere, in der Einbaustellung zur Sonnenseite gewandte Flächenelement ist üblicherweise eine Glasscheibe 3 und das untere Flächenelement ein den Boden des Kollektors bildendes Blech 4, vorzugsweise in wärmeisolierender Ausführung. Als Rahmenprofil für die Hybridkollektoren wird vorzugsweise ein System-Solarkollektorrahmenprofil nach der DE 199 15 504 verwendet.

Das Gehäuse aus den Rahmenprofilen 2, der Glasscheibe 3 und dem Boden 4 nimmt ein Absorberblech 5 auf, dass sich annähernd über die ganze Fläche des Gehäuseinneren erstreckt bzw. aufspannt.

Das Absorberblech 5 der erfindungsgemäßen Kollektoren besteht vorzugsweise aus Aluminium und ist damit kostengünstiger zu fertigen als die Kupferbleche der Ausführungsbeispiele des Standes der Technik.

Das Absorberblech wird zur Erhöhung der Energieeffizienz an seiner Oberseite z. B. mit einer schwarzen Folie bedeckt, schwarz beschichtet oder schwarz eloxiert (hier nicht dargestellt bzw. zu erkennen).

An der Unterseite, d.h. auf der von der Sonne abgewandten Seite sind am Absorberblech 5 Flüssigkeitsrohre 6 angeordnet. Durch diese Flüssigkeitsrohre 6 wird Wärmeenergie, z.B. durch Brauchwasser, von dem Absorberblech 5 abgeleitet und zur weiteren Nutzung außerhalb des Kollektors bereitgestellt.

Die Flüssigkeitsrohre 6 werden von Luftleitblechen 7 gehalten, die als Wärmetauscher und Luftleitbleche fungieren. Die Luftleitbleche erfüllen also die Funktionen des Haltens der Flüssigkeitsrohre, des Wärmetausches und der Luftlenkung.

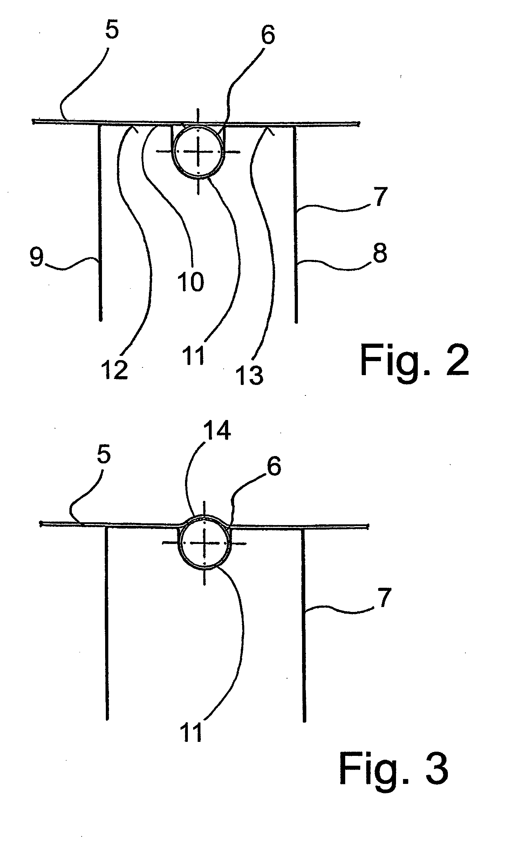

Die Fig. 2 und 3 zeigen jeweils einen Teilschnitt durch den erfindungsgemäßen Absorber.

Der im Teilschnitt gezeigte Bereich besteht aus dem oberen Absorberblech 5, vorzugsweise aus geschwärztem Aluminium, unter dem Blech ein Flüssigkeitsrohr 6 aus Kupfer angeordnet ist, wie es beispielsweise für die Wasserleitungen eines Hauses verwendet wird. In dem Flüssigkeitsrohr wird ein Solarfluid (z.B. Brauchwasser) geführt, dass in einem üblicherweise kollektorübergreifenden Flüssigkeitskreislauf umströmt.

Unter dem Absorberblech 5 ist ein U-förmiges Aluminiumblech angeordnet, das als Wärmetauscher- und Luftleitblech 7 fungiert.

Das U-förmige Luftleitblech 7 besteht dabei aus zwei senkrecht angeordneten Schenkeln 8 und 9 und einer parallel zum Absorberblech angeordneten Basis 10.

Die Basis 10 ist mit dem Absorberblech 5 verbunden, vorzugsweise in einem Laser-Pulsschweiß-Verfahren. Da sowohl das Absorberblech als auch die Luftleitbleche aus Aluminium bestehen, sind diese relativ kostengünstig herstellbar und zu verarbeiten. Sichtbare Schweiß- und Lötstellen an der Außenseite des Absorbers werden vermieden.

Die Basis 10 weist eine Haltevorrichtung, hier eine Aufnahmenut 11 auf, die dazu dient, die Flüssigkeitsrohre 6 direkt unter dem Absorber 5 derart zu halten, dass ein guter Wärmeübergang vom Absorber auf das Flüssigkeitsrohr 6 gewährleistet wird. Hierbei kann auch ein Spalt zwischen Absorber und Flüssigkeitsrohr vorgesehen werden, der verhindert, dass das durch Wärme radial ausgedehnte Rohr unter den Absorber drückt.

Die Aufnahmenut 11 ist dem Radius des Flüssigkeitsrohres 6 entsprechend formschlüssig ausgebildet und umschließt das Flüssigkeitsrohr um 180° und auf ganzer Luftleitblechlänge, wodurch sich ein hervorragender Wärmeübergang ergibt.

Die Ausführungsform nach Figur 3 zeigt, dass das Flüssigkeitsrohr 6 nicht nur durch die Aufnahmenut 11 des Luftleitbleches 7 umgriffen werden kann, sondern zusätzlich noch einen Formschluss mit dem Absorberblech 5 in einer weiteren Aufnahmenut 14, die im Absorberblech ausgebildet ist. Hierdurch wird der Wärmeübergang weiter optimiert.

Das Flüssigkeitsrohr 6 wird bei der Ausführungsform nach Figur 3 mindestens auf einem Winkel von 270° umschlossen.

Der Basisschenkel 10 der Wärmetauscher bzw. Luftleitbleche 7 teilt sich in den Bereich der Aufnahmenut 11 auf, die zur Aufnahme des Flüssigkeitsrohres dient, und in die beiden Verbindungsflächen 12 und 13, an denen die Verbindung zum Absorberblech 5 hergestellt wird. Hierbei ist selbstverständlich nicht nur das vorzugsweise verwendete Laser-Pulsschweiß-Verfahren einsetzbar sondern auch andere Verbindungsverfahren.

Vorzugsweise werden beide Verbindungsflächen 12 und 13 als Nahtreihen verwendet. Daneben ist auch eine durchgängige Verbindung möglich bzw. realisierbar.

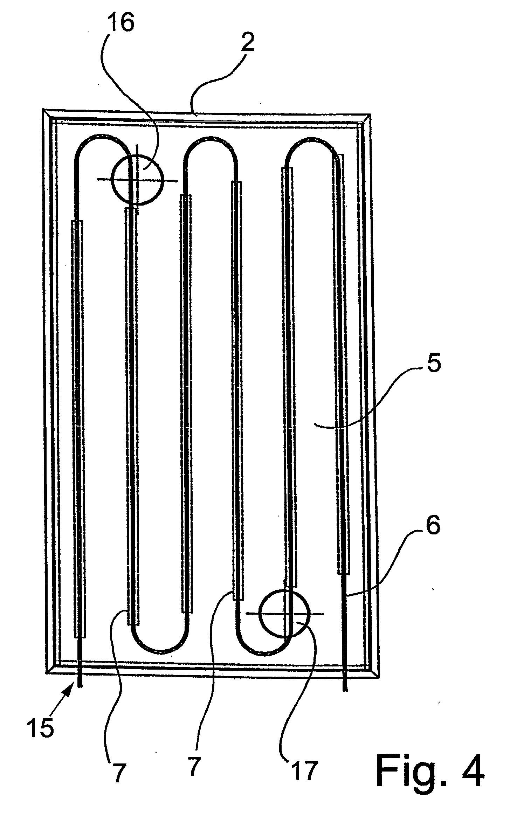

Die Figuren 4 - 7 zeigen jeweils schematisch die Draufsicht eines erfindungsgemäßen Hybridkollektors mit unterschiedlicher Flüssigkeitsrohranordnung.

Der Hybridkollektor nach Figur 4 mit dem Rahmenprofil 2, weist eine meanderförmige Anordnung des Flüssigkeitsrohres 6 für den Flüssigkeitskreislauf auf.

Unter dem Absorberblech 5 ist also das meanderförmige Flüssigkeitsrohr 6 angeordnet und wird durch schräg versetzt angeordnete, gleich lange Luftleitbleche 7 (gestrichelt dargestellt) gehalten. Die schräg versetzte Anordnung der Luftleitbleche 7 bewirkt, dass der Strömungsweg der Luft im Kollektor von einer Eingangsöffnung 16 zu einer Auslassöffnung 17 im Wesentlichen im gesamten Kollektor gleich lang ist (siehe im Bezug auf das letztere Detailmerkmal auch de DE 201 00 746).

Das Flüssigkeitsrohr 6 kann sich axial bzw. longitudinal im Kröpfungsbereich ausdehnen, ohne dabei das Absorberblech oder die Luftleitbleche zu beeinflussen.

Die Öffnungen 16 und 17 befinden sich im Boden 4 des Kollektorgehäuses und sind mit einer Luftleitung verbunden.

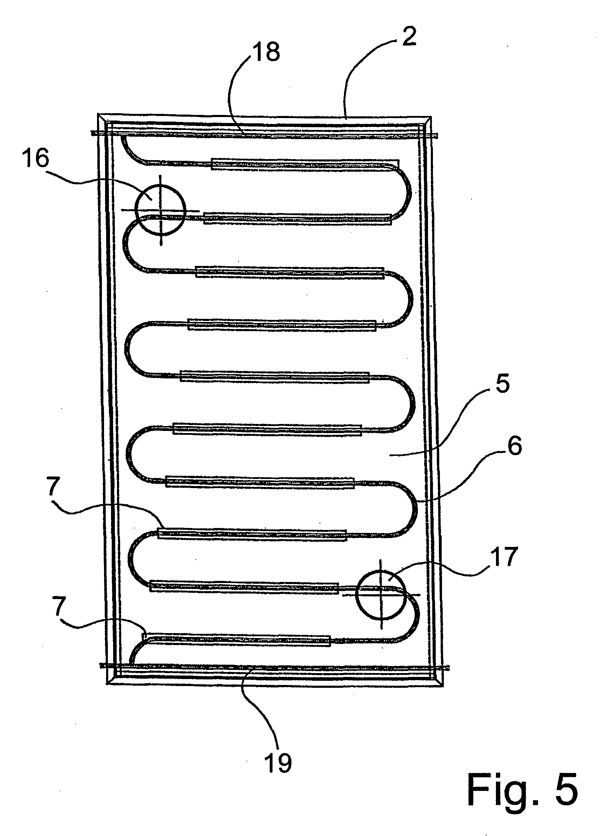

Figur 5 zeigt einen Hybridkollektor mit einem sogenannten Sammelrohrmeander. Der Kollektorrahmen wird wieder durch das Rahmenprofil 2 gebildet, in dem ein Absorberblech 5 angeordnet ist.

Unter dem Absorber ist ein meanderförmiges Flüssigkeitsrohr 6 angeordnet, dessen Enden in den Sammelrohre 18 und 19 enden. Hieraus ergibt sich der Vorteil, dass die Flüssigkeitsrohre 6 mehrere Hybridkollektoren besonders einfach miteinander zu koppeln sind.

Die Luftleitbleche 7 sind, wie bei dem Kollektor nach Figur 4, schräg angeordnet, so dass sich im gesamten Kollektorgehäuse Luftwege annähernd gleicher Länge ergeben.

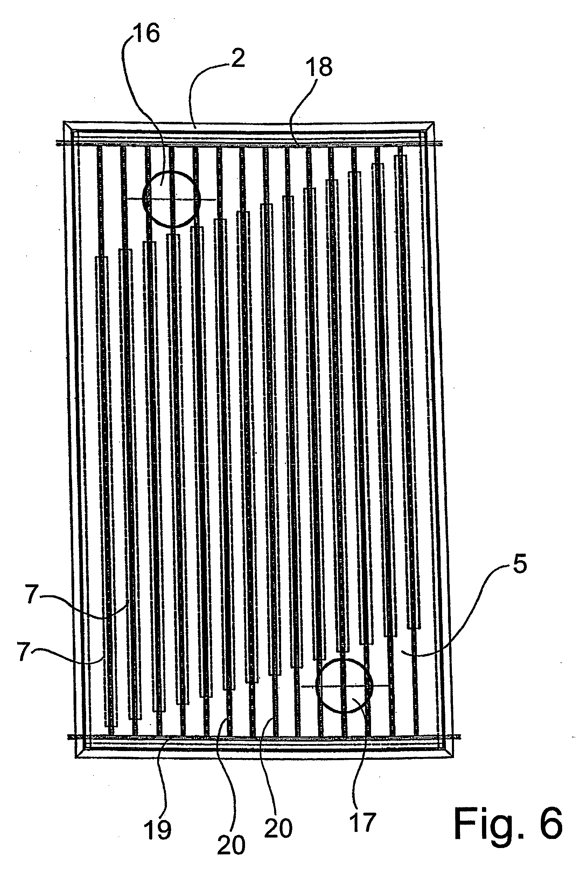

Figur 6 zeigt einen Hybridkollektor, gebildet aus einem Rahmenprofil 2, mit einem Absorberblech 5, unter dem mehrere Flüssigkeitsrohre 20 angeordnet sind, die als "Harfe" bezeichnet werden. Im Gegensatz zu Figur 4 und 5 ist hier eine Vielzahl von Flüssigkeitsrohren 20 angeordnet, die jeweils in Sammelrohre 18 und 19 münden. Auch bei dieser Flüssigkeitsrohranordnung sind die Luftleitbleche 7 schräg gestuft angeordnet um die Luftwege optimal zu gestalten.

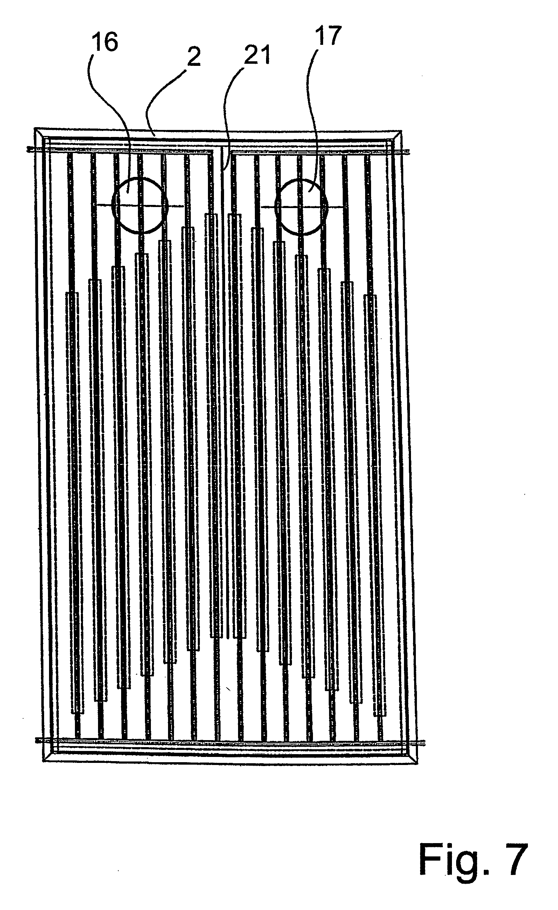

Figur 7 zeigt einen Hybridkollektor mit einer sogenannten "halben Harfe". Vorteilhaft hieran ist, dass die Luftein- und -auslasse 16 und 17 auf der gleichen Seite angeordnet sind. Hierdurch ergeben sich dann Montagevorteile, wenn mehrere Kollektoren in Reihe geschaltet werden. Zusätzlich wird unter der Absorberfläche eine Wand 21 eingezogen, um die doppelt schräg angeordneten Luftleitbleche 7 und damit den Luftströmung so zu lenken, dass wieder die Luft von Einlass zum Auslass im gesamten Kollektor nahezu die gleiche Wegstrecke zurücklegt.

Vorteilhaft ist die Mehrfachnutzung des Luftleitbleches 7, wobei die Anordnung derart ist, dass die Rohre 6 zwischen diesen Blechen 7 und dem Absorberblech liegen, wobei auch nur letzteres Ausnehmungen/Nuten für die Rohre 6 aufweisen kann.

### Bezugszeichen

- Hybridkollektor: 1
- Rahmenprofilen: 2
- Glasscheibe: 3
- Blech: 4
- Absorberblech: 5
- Flüssigkeitsrohre: 6
- Luftleitblechen: 7
- Schenkel: 8 und 9
- Basis: 10
- Aufnahmenut: 11
- Verbindungsflächen: 12 und 13
- Aufnahmenut: 14
- Flüssigkeitskreislauf: 15
- Einlassöffnung: 16
- Auslassöffnung: 17
- Sammelrohre: 18 und 19
- Flüssigkeitsrohre: 20
- Wand: 21

## Patentansprüche

1. Hybridkollektor mit:
a. einem Gehäuse, das ein Rahmenprofil, eine obere Abdeckung, insbesondere eine Glasscheibe, und eine untere Abdeckung, insbesondere ein Blech, aufweist, und
b. einem in dem Gehäuse angeordneten Absorber, der dazu ausgelegt ist, Sonnenenergie in Wärme umzuwandeln und der
i. ein Absorberblech,
ii. Strömungskanäle für Luft, die wenigstens eines oder mehrere Luftleitbleche umfassen und
iii. Leitungen für eine Flüssigkeit, insbesondere Wasser, aufweist,
c. wobei die Flüssigkeitsleitungen (6) von den Luftleitblechen (7) an dem Absorberblech (5) gehalten sind,
d. wobei die Luftleitbleche (7) formschlüssig wirkende Haltevorrichtungen zum Halten und Positionieren der Flüssigkeitsleitungen (6) an den Absorberblechen (5) aufweisen,
e. wobei die Flüssigkeitsleitungen (6) als Flüssigkeftsrohre ausgebildet sind und wobei die Haltevorrichtungen der Luftleitbleche (7) als zur Rohrgeometrie korrespondierende Aufnahmenuten (11) ausgebildet sind, welche dem Radius der Flüssigkeitsrohre entsprechend formschlüssig ausgebildet sind,
**dadurch gekennzeichnet, dass**
f. die Luftleitbleche (7) sich in Richtung der Flüssigkeitsrohre erstrecken, wobei die Aufnahmenuten (11) die Flüssigkeitsrohre um 180° und auf ganzer Luftleitblechlänge umschliessen.

2. Hybridkollektor nach Anspruch 1, **dadurch gekennzeichnet, dass** zwischen den Flüssigkeitsleitungen (6) und den Absorberblechen und vorzugsweise auch zwischen den Flüssigkeitsleitungen (6) und den Luftleitblechen (7) keine stoffschlüssige Verbindung ausgebildet ist.

3. Hybridkollektor nach Anspruch 1, **dadurch gekennzeichnet, dass** die Absorberbleche (5) zu den Haltevorrichtungen der Luftleitbleche (7) korrespondierende Haltevorrichtungen zum Halten und Positionieren der Flüssigkeitsleitungen (6) aufweisen.

4. Hybridkollektor nach Anspruch 1 oder 3, **dadurch gekennzeichnet, dass** die Haltevorrichtungen des Absorberbleches (5) als zur Rohrgeometrie korrespondierende Aufnahmenuten (14) ausgebildet sind.

5. Hybridkollektor nach einem der vorstehenden Ansprüche, **dadurch gekennzeichnet, dass** das Gehäuse des Hybridkollektors auf einem umlaufenden Rahmen aus Rahmenprofilen (2) aufbaut, der die Ränder der oberen und unteren Flächenelemente aufnimmt.

6. Hybridkollektor nach einem der vorstehenden Ansprüche, **dadurch gekennzeichnet, dass** das Absorberblech (5) und/oder das Luftleitblech (7) aus Leichtmetall, insbesondere Aluminium bestehen.

7. Hybridkollektor nach einem der vorstehenden Ansprüche, **dadurch gekennzeichnet, dass** das Absorberblech (5) und/oder das Luftleitblech (7) aus Leichtmetall, insbesondere Aluminium, und die Flüssigkeitsleitungen aus einem anderen Material, insbesondere Kupfer, bestehen.

8. Hybridkollektor nach einem der vorstehenden Ansprüche, **dadurch gekennzeichnet, dass** das Absorberblech an seiner dem Sonnenlichteinfall zugewandten Seite von Folie bedeckt, schwarz beschichtet oder schwarz eloxiert ist.

9. Hybridkollektor nach einem der vorstehenden Ansprüche, **dadurch gekennzeichnet, dass** wenigstens eines der Luftleitbleche (7) eine U-Form aufweist, dessen Basis zum Absorberblech (5) gewandt ist, wobei die Flüssigkeitsleitungen zwischen dem Absorberblech (5) und der Aufnahmenut der Basis angeordnet sind.

10. Hybridkollektor nach einem der vorstehenden Ansprüche, **dadurch gekennzeichnet, dass** die Basis (10) stoffschlüssig mit dem Absorberblech (5) verbunden ist, vorzugsweise in einem Laser-Pulsschweiß-Verfahren.

11. Hybridkollektor nach einem der vorstehenden Ansprüche, **dadurch gekennzeichnet, dass** das Flüssigkeitsrohr (6) meanderförmig ausgestaltet ist und dass die haltenden Luftleitbleche (7) schräg zueinander versetzt angeordnet sind.

12. Hybridkollektor nach einem der vorstehenden Ansprüche, **dadurch gekennzeichnet, dass** die Enden des meanderförmigen Flüssigkeitsrohrs (6) in Sammelrohre (18 und 19) münden.

13. Hybridkollektor nach einem der vorstehenden Ansprüche, **dadurch gekennzeichnet, dass** die Luftleitbleche (7) derart angeordnet sind, dass sich im gesamten Kollektorgehäuse Strömungskanäle für die Luft von annähernd gleicher Länge ergeben.

14. Hybridkollektor nach einem der vorstehenden Ansprüche, **dadurch gekennzeichnet, dass** die Luftein- und -auslasse (16 und 17) beide am gleichen Randbereich auf einer Seite des Gehäuses angeordnet sind.

## Claims

1. A hybrid collector, comprising:
a) a housing having a frame section, an upper cover, especially a glass pane, and a bottom cover, especially a plate, and
b) an absorber arranged in the housing, which is arranged to convert solar energy into heat, and which comprises
i) an absorber plate;
ii) flow channels for air, which comprise at least one or several air guide plates, and
iii) pipes for a liquid, especially water;
c) wherein the pipes (6) are held by the air guide plates (7) on the absorber plate (5);
d) wherein the air guide plates (7) comprise retaining apparatuses acting in an interlocking fashion for holding and positioning the pipes (6) on the absorber plates (5);
e) wherein the pipes (6) are arranged as pipes for liquids, and wherein the retaining apparatuses of the air guide plates (7) are arranged as receiving grooves (11) which correspond to the pipe geometry and which are arranged in an interlocking manner according to the radius of the pipes;
**characterized in that**
f) the air guide plates (7) extend in the direction of the pipes, wherein the receiving grooves (11) surround the pipes by 180° and over the entire length of the air guide plates.

2. A hybrid collector according to claim 1, **characterized in that** no material connection is formed between the pipes (6) and the absorber plates and preferably also between the pipes (6) and the air guide plates (7).

3. A hybrid collector according to claim 1, **characterized in that** the absorber plates (5) comprise retaining apparatuses for holding and positioning the pipes (6), which retaining apparatuses correspond to the retaining apparatuses of the air guide plates (7).

4. A hybrid collector according to claim 1 or 3, **characterized in that** the retaining apparatuses of the absorber plate (5) are arranged as receiving grooves (14) which correspond to the pipe geometry.

5. A hybrid collector according to one of the preceding claims, **characterized in that** the housing of the hybrid collector is based on a circumferential frame made of frame sections (2) which accommodates the edges of the upper and lower flat elements.

6. A hybrid collector according to one of the preceding claims, **characterized in that** the absorber plate (5) and/or the air guide plate (7) consist of light metal, especially aluminium.

7. A hybrid collector according to one of the preceding claims, **characterized in that** the absorber plate (5) and/or the air guide plate (7) consist of light metal, especially aluminium, and the pipes consist of another metal, especially copper.

8. A hybrid collector according to one of the preceding claims, **characterized in that** the absorber plate is covered by a foil, coated in black or anodized in black on its side facing the sunlight incidence.

9. A hybrid collector according to one of the preceding claims, **characterized in that** at least one of the air guide plates (7) is U-shaped, whose base faces the absorber plate (5), wherein the pipes are arranged between the absorber plate (5) and the receiving groove of the base.

10. A hybrid collector according to one of the preceding claims, **characterized in that** the base (10) is materially connected to the absorber plate (5), preferably by means of a laser pulsed-arc welding process.

11. A hybrid collector according to one of the preceding claims, **characterized in that** the pipe (6) is arranged in a meandering fashion and the retaining air guide plates (7) are arranged diagonally offset with respect to each other.

12. A hybrid collector according to one of the preceding claims, **characterized in that** the ends of the meandering pipe (6) open into manifolds (18 and 19).

13. A hybrid collector according to one of the preceding claims, **characterized in that** the air guide plates (7) are arranged in such a way that flow channels for the air of approximately the same length are produced in the entire collector housing.

14. A hybrid collector according to one of the preceding claims, **characterized in that** the air inlets and outlets (16 and 17) are both arranged on the same boundary region on one side of the housing.

## Revendications

1. Collecteur hybride avec :
a. un boîtier, qui comprend un profilé de châssis, un recouvrement supérieur, en particulier une plaque de verre et un recouvrement inférieur, en particulier une tôle, et
b. un absorbeur qui est disposé dans le boîtier et est conçu pour convertir l'énergie solaire en chaleur et qui comprend :
i. une tôle d'absorbeur,
ii. des canaux d'écoulement pour l'air qui comprennent au moins une ou plusieurs tôles de déflection d'air et
iii. des conduites pour un liquide, en particulier de l'eau,
c. les conduites de liquide (6) étant maintenues par les tôles de déflection d'air (7) sur la tôle d'absorbeur (5),
d. les tôles de déflection d'air (7) comportant des dispositifs de retenue à action mécanique, servant à retenir et positionner les conduites de liquide (6) sur les tôles d'absorbeur (5),
e. les conduites de liquide (6) étant conçues en tant que tubes de liquide tandis que les dispositifs de retenue des tôles de déflection d'air (7) sont conçus sous forme de gorges de réception (11), correspondant à la géométrie des tubes, lesquelles étant conçus avec une complémentarité de forme correspondant au rayon des tubes de liquide,
**caractérisé en ce que**
f. la tôle de déflection d'air (7) s'étend en direction des tubes de liquide, les gorges de réception (11) entourant les tubes de liquide sur 180° et sur toute la longueur de la tôle de déflection d'air.

2. Collecteur hybride selon la revendication 1, **caractérisé en ce qu'**aucune liaison par continuité de matière n'est formée entre les conduites de liquide (6) et les tôles d'absorbeur et, de préférence, ni entre les conduites de liquide (6) et les tôles de déflection d'air (7).

3. Collecteur hybride selon la revendication 1, **caractérisé en ce que** les tôles d'absorbeur (5) comprennent des dispositifs de retenue correspondant aux dispositifs de retenue des tôles de déflection d'air (7) pour retenir et positionner les conduites de liquide (6).

4. Collecteur hybride selon la revendication 1 ou 3, **caractérisé en ce que** les dispositifs de retenue de la tôle d'absorbeur (5) sont conçus en tant que gorges de réception (14) correspondant à la géométrie des tubes.

5. Collecteur hybride selon l'une quelconque des revendications précédentes, **caractérisé en ce que** le boîtier du collecteur hybride est établi sur un châssis périphérique fait de profilés de châssis (2) qui reçoit les bords des éléments plats supérieurs et inférieurs.

6. Collecteur hybride selon l'une quelconque des revendications précédentes, **caractérisé en ce que** la tôle d'absorbeur (5) et/ou la tôle de déflection d'air (7) sont composées de métal léger, en particulier d'aluminium.

7. Collecteur hybride selon l'une quelconque des revendications précédentes, **caractérisé en ce que** la tôle d'absorbeur (5) et/ou la tôle de déflection d'air (7) sont composées de métal léger, en particulier d'aluminium, et les conduites de liquide d'un autre matériau, en particulier de cuivre.

8. Collecteur hybride selon l'une quelconque des revendications précédentes, **caractérisé en ce que** la tôle d'absorbeur est recouverte sur sa face tournée vers la lumière incidente du soleil par un film, par une couche noire ou est anodisée en noir.

9. Collecteur hybride selon l'une quelconque des revendications précédentes, **caractérisé en ce qu'**au moins une des tôles de déflection d'air (7) présente une forme en U dont la base est tournée vers la tôle d'absorbeur (5), les conduites de liquide étant disposées entre la tôle d'absorbeur (5) et la gorge de réception de la base.

10. Collecteur hybride selon l'une quelconque des revendications précédentes, **caractérisé en ce que** la base (10) est reliée par continuité de matière à la tôle d'absorbeur (5), de préférence selon un procédé de soudure à impulsions laser.

11. Collecteur hybride selon l'une quelconque des revendications précédentes, **caractérisé en ce que** le tube de liquide (6) est conçu sous une forme de méandre et **en ce que** les tôles de déflection d'air (7) de retenue sont disposées décalées obliquement les unes par rapport aux autres.

12. Collecteur hybride selon l'une quelconque des revendications précédentes, **caractérisé en ce que** les extrémités du tube de liquide (6) en forme de méandre débouchent dans des tubes de collecte (18 et 19).

13. Collecteur hybride selon l'une quelconque des revendications précédentes, **caractérisé en ce que** les tôles de déflection d'air (7) sont disposées de manière telle qu'il en résulte dans tout le boîtier du collecteur que les canaux d'écoulement pour l'air ont une longueur pratiquement identique.

14. Collecteur hybride selon l'une quelconque des revendications précédentes, **caractérisé en ce que** les entrées et sorties d'air (16 et 17) sont disposées toutes deux sur le même secteur périphérique sur un côté du boîtier.
